# EUROPÄISCHE PATENTSCHRIFT

(11) **EP 0 948 152 B1**
(45) Veröffentlichungstag und Bekanntmachung des Hinweises auf die Patenterteilung: **21.09.2005**
(21) Anmeldenummer: 99104257.3
(22) Anmeldetag: 03.03.1999
(51) Int. Cl.: H04B 10/18

(54) **Verfahren und Vorrichtung zur Kompensation der Polarisationsmodendispersion in einer optischen Übertragungsstrecke**
Method and apparatus for compensating the polarisation mode dispersion in an optical transmission line
Méthode et dispositif de compensation de la dispersion de mode de polarisation d'une ligne de transmission optique

(30) Priorität: 01.04.1998 DE 19814497
(43) Veröffentlichungstag der Anmeldung: 06.10.1999
(73) Patentinhaber: Deutsche Telekom AG, 53113 Bonn (DE)
(72) Erfinder: Dultz, Wolfgang, Prof. Dr. Dr., 65936 Frankfurt/M. (DE); Beresnev, Leonid, Dr., Columbia, MD 21044 (US); Schmitzer, Heidrun, Dr., 93051 Regensburg (DE); Hils, Bernhard, 61462 Königstein/Taunus (DE); Vobian, Joachim, Dr., 64367 Mühltal (DE)

(56) Entgegenhaltungen:
- EP-A- 0 720 031
- BUELOW H: "EQUALIZATION OF BIT DISTORTION INDUCED BY POLARIZATION MODE DISPERSION" CORE AND ATM NETWORKS. NOC, XX, XX, 17. Juni 1997 (1997-06-17), Seiten 65-72, XP001004888
- TAKAHASHI T ET AL: "Automatic compensation technique for timewise fluctuating polarisation mode dispersion in in-line amplifier systems" ELECTRONICS LETTERS, IEE STEVENAGE, GB, Bd. 30, Nr. 4, 17. Februar 1994 (1994-02-17), Seiten 348-349, XP006000245 ISSN: 0013-5194

## Beschreibung

### Gegenstand der Erfindung:

Die Erfindung betrifft ein Verfahren und eine Vorrichtung zur Kompensation der Polarisationsmodendispersion in einer optischen Übertragungsstrecke mit polarisationsabhängigen Übertragungseigenschaften, insbesondere in optischen Fasern und Kabeln mit nicht lediglich statistischer, sondern bevorzugter Doppelbrechung.

### Stand der Technik:

Optische Glasfasern und optische Kabel sind im allgemeinen nicht optisch isotrop, sondern haben eine kleine Restdoppelbrechung die durch schwache Kernelliptizität, durch Biegungen und Verwindungen der Faser verursacht werden kann. Diese Restdoppelbrechung variiert mehr oder weniger statistisch über die Länge der Faser und läßt sich in einfachen Modellen mit Hilfe einer Binomialverteilung beschreiben: Die Polarisationsmoden des Lichtes spalten sich von Faserstück zu Faserstück immer weiter auf, durchlaufen als schnelle bzw. langsame Eigenwelle das doppelbrechende Faserstück und verzweigen sich im nächsten Faserstück aufs neue. Jedem Weg entspricht eine gewisse Gruppenlaufzeit; die Verteilung der Gesamtheit dieser Laufzeiten hat eine Halbwertsbreite, die proportional der Wurzel aus der Zahl der Faserstücke und damit der Wurzel aus der Faserlänge ist. Dies ist eine Eigenschaft der Binominalverteilung.

Die Grenzen der Verteilung sind durch die Wege in der Faser bestimmt, bei denen das Licht jedes der doppelbrechenden Faserstücke als schnelle Polarisationsmode bzw. jedes der doppelbrechenden Faserstücke als langsame Polarisationsmode durchquert hat. Im mittleren Laufzeitbereich hat das Licht etwa die eine Hälfte der Faserstücke als schnelle, die andere Hälfte als langsame Polarisationsmode durchlaufen. Die einzelnen Faserstücke sind dabei untereinander nicht gleich; ihre Länge, ihre Verzögerung und ihre Achsorientierung können variieren.

Die unterschiedliche Laufzeit der Polarisationsmoden verbreitert einen mit beliebiger Polarisation in eine Glasfaser eingekoppelten optischen Impuls beim Durchlaufen der Faser. Besonders bei der digitalen Übertragung im Bereich von etwa 10 GHz tritt die Polarisationsmodendispersion als Störfaktor auf und begrenzt durch die Verbreiterung eines optischen Pulses die maximale Übertragungsrate und/oder die Größe des Systems. Die Dispersion der Polarisationsmoden konventioneller Glasfasern begrenzt die Leistungsfähigkeit vieler optischer Systeme, wie Hochgeschwindigkeits-Übertragungsstrecken oder breitbandig betriebene Verzögerungsleitungen.

Eine optische Kompensation der Polarisationsmodendispersion muß die Anteile eines optischen Impulses, die schneller als der Mittelwert waren verzögern und die Anteile, die langsamer als der Mittelwert waren beschleunigen. Bei einer statistisch unabhängigen gleichverteilten Orientierung der doppelbrechenden Achsen innerhalb einer optischen Übertragungsstrecke gelingt die Kompensation nur dann, wenn man den Impuls mit orthogonaler Polarisation durch die gesamte Faser zurücklaufen läßt. Für die Telekommunikation ist dieses jedoch keine Lösung, da das unverzerrte Signal statt am Ausgang der Faser wieder am Eingang vorliegt.

Es hat sich allerdings herausgestellt, daß nicht alle optischen Fasern und Kabel mit hoher Polarisationsmodendispersion eine statistisch unabhängige gleichverteilte Orientierung der doppelbrechenden Achsen haben, da die Biegungen von Kabeln im allgemeinen auf Kabelträgern in einer bevorzugeten Richtung, z.B. vertikal und horizontal, erfolgt. Für solche optischen Übertragungsstrecken sind die Achsorientierungen der einzelnen doppelbrechenden Faserstücke z. B. bevorzugt vertikal und horizontal, so daß das Übertragungssignal zwei Hauptpolarisationen P_{Ü,S} und P_{Ü,L} aufweist, die zueinander orthogonal sind. Durch statistische Schwankungen der Achsorientierungen der Faserstücke weist das übertragene Signal jedoch auch Polarisationskomponenten auf, die von P_{Ü,S} bzw. P_{Ü,L} abweichen, wobei die Schwerpunkte der Verteilungen jedoch bei P_{Ü,S} bzw. P_{Ü,L} liegen.

Eine besonders große Polarisationsmodendispersion kann durch lokale Elliptizität des Faserkerns verursacht werden. Auch eine derartige Doppelbrechung kann eine Vorzugsrichtung im Raum haben und daher kompensierbar sein. Eine einzelne Polarisationsmode durchläuft viele Faserstücke nur als schnelle bzw. als langsame Mode, ohne am Eingang besonders aufgefächert zu werden. In der Regel koppelt man am Eingang der Übertragungsstrecke in beide Polarisationsmoden P_{Ü,S} bzw. P_{Ü,L} ein, diese zeigen über die ganze Kabellänge keine Überkopplung in den anderen Polarisationskanal und verlassen das Kabel als zwei getrennte Impulse zu verschiedenen Zeiten. Der Laufzeitunterschied dieser Impulse ist prinzipiell kompensierbar.

Eine Teilkompensation der Polarisationsdispersion ist möglich, wenn zwar eine gewisse statistische Impulsverbreiterung vorliegt aber immer noch zwei Schwerpunkte des Impulses mit zueinander orthogonaler Polarisation P_{Ü,S} bzw. P_{Ü,L} und mit unterschiedlichen Gruppenlaufzeiten existieren.

Das US-Patent Nr. 5600, 738 behandelt das Problem der Polarisationsmodendispersion in optischen Einrichtungen, insbesondere in optischen Schaltern und Kopplungselementen für Lichtwellenleitern. Diese sind bevorzugt aus stark doppelbrechendem Material, z.B. Lithiumniobat (LiNbO₃) und führen zu starker Verzerrung eines optischen Pulses infolge der unterschiedlichen Laufzeiten für die schnelle bzw. langsame Polarisationsmode bei willkürlicher Eingangspolarisation des Pulses. Ohne Kompensation der Polarisationsmodendispersion ist die Gesamtlänge dieser Elemente innerhalb einer optischen Übertragungsstrecke begrenzender Faktor für deren Übertragungsleistung. Das US-Patent 5600,738 schlägt zur Kompensation der Polarisationsmodendispersion vor, die optischen Elemente aus zwei oder mehr Substraten zu bilden, die derart miteinander gekoppelt werden, daß die in einem der Substrate erzeugte Polarisationsdispersion in den anderen Substraten ausgeglichen wird. Dazu werden beispielsweise zwei doppelbrechende Kristallstücke verwendet, die derart miteinander gekoppelt werden, daß der schnelle Polarisationszustand des einen Kristallstücks auf den langsamen Polarisationszustand des anderen Kristallstücks abgebildet wird und umgekehrt, so daß das zusammengesetzte Element eine Gesamtpolarisationsdispersion von etwa Null aufweist. Bei gleichem Material sind die Längen der Kristallstücke vorzugsweise gleich; bei unterschiedlichem Material sind sie so zu wählen, daß sich die Laufzeitdifferenzen gerade ausgleichen. Obwohl mit der von der US 5600,738 vorgeschlagenen Methode Polarisationsdispersion aufgrund von doppelbrechenden Kopplungselementen und/oder Schaltern zwischen optischen Fasern bzw. Kabeln ausgeglichen werden kann, kann die Polarisationsdispersion aufgrund der schwach vorhandenen doppelbrechenden Eigenschaften der Glasfasern innerhalb der Übertragungsstrecke mit dieser Methode nicht gelöst werden.

Es ist zur Kompensation der Polarisationsdispersion einer Übetragungsstrecke jedoch möglich, am Ausgang der Übertragungsstrecke die beiden charakteristischen Polarisationsrichtungen P_{Ü,S} bzw. P_{Ü,L} zu bestimmen und die entsprechenden Gruppenlaufzeiten bzw. die Laufzeitdifferenz zwischen den Polarisationskomponenten P_{Ü,S} und P_{Ü,L} zu messen. Eine Kompensation der Polarisationsdispersion kann erreicht werden, indem im Ausgang der Übertragungsstrecke die beiden charakteristischen Polarisationsrichtungen durch einen polarisierenden Strahlteiler aufgeteilt werden, wobei durch das Einbringen optischer Laufzeitstrecken in einem oder beiden Teilstrahlengängen die unterschiedliche Gruppenlaufzeit ausgeglichen wird. Anschließend werden die Teilstrahlengänge mit einem polarisierenden Koppler wieder vereinigt.

Es ist weiterhin bekannt (*J. Patscher, R. Eckardt, Electronics Letters, Vol. 33, No. 13, p. 1157*), eine polarisationserhaltende Faser zur Kompensation zu verwenden. Polarisationserhaltende Fasern sind stark doppelbrechend, in der Regel durch einen elliptischen Kern. Somit kann mit einem relativ kurzen Stück einer solchen Kompensationsfaser ein Laufzeitunterschied zwischen den Polarisationskomponenten P_{S} und P_{L} der Faser erzeugt werden, der den Laufzeitunterschied zwischen de Hauptpolarisationskomponenten P_{Ü,S} bzw. P_{Ü,L} der Übertragungsstrecke kompensiert. Dazu muß die Polarisationsmodendispersion bzw. die Laufzeitdifferenz der Übertragungsstrecke gemessen, die richtige Länge der Kompensationsfaser berechnet, das Stück abgeschnitten und in der richtigen Orientierung angespleißt werden, so daß die zuvor zu schnelle Polarisationskomponente verzögert wird und umgekehrt. Problematisch bei diesem Verfahren ist der relativ hohe Meßaufwand zum einen zur Bestimmung der Laufzeitdifferenz und damit der richtigen Länge, zum anderen zur Ermittlung der Hauptpolarisationen P_{Ü,S} bzw. P_{Ü,L} der Übertragungsstrecke zur Bestimmung der richtigen Orientierung der Kompensationsfaser. Es ist bei einmal präparierter Kompensationsfaser kein weiterer Abgleich zur Korrektur der berechneten Orientierung bzw. Länge möglich.

### Technische Aufgabe:

Der Erfindung liegt damit die Aufgabe zugrunde, ein Verfahren zur Verfügung zu stellen, mit welchem die Kompensation der Polarisationsmodensdispersion einer optischen Übertragungsstrecke, insbesondere einer Glasfaser mit anisotroper, nicht lediglich statistischer Doppelbrechung, zerstörungsfrei durchgeführt werden kann, ohne daß vorherige Messungen der Laufzeitdifferenz und/oder der Polarisationseigenschaften der Übertragungsstrecke notwendig sind. Weiterhin soll eine entsprechende Vorrichtung zur Kompensation der Polarisationsmodendispersion zur Verfügung gestellt werden.

### Offenbarung der Erfindung und deren Vorteile:

Die Aufgabe wird gelöst durch ein Verfahren zur Kompensation der Polarisationsmodendispersion in einer optischen Übertragungsstrecke mit einem Eingang E und einem Ausgang A und mit polarisationsabhängigen Übertragungseigenschaften, mit folgenden Schritten: Ein doppelbrechendes Kompensationselements wird vor oder nach der optischen Übertragungsstrecke angeordnet, wobei das Kompensationselements einen Eingang E', einen Ausgang A', einen schnell und einen langsam übertragenen Hauptpolarisationszustand P_{S} bzw. P_{L} und die Länge L₀ hat.

Je nachdem, ob sich das Kompensationselement vor oder nach der Übertragungsstrecke befindet, wird das über die Übertragungsstrecke übertragene oder zu übertragende Signal unterschiedlich in das Kompensationselement eingekoppelt: Befindet sich das Kompensationselement vor der Übertragungsstrecke, wird derart eingekoppelt, daß die Polarisation P₀ des Übertragungssignals mit einem der Polarisationszustände P_{S} bzw. P_{L} des Kompensationselements übereinstimmt. Befindet sich das Kompensationselement nach der Übertragungsstrecke, werden die Polarisationen P_{Ü,L} und P_{Ü,S} der langsamen bzw. schnellen Komponente des Übertragungssignals auf jeweils einen der Polariationszustände P_{S} bzw. P_{L} des Kompensationselements abgebildet.

Weiterhin wird zur Überkopplung der in der Polarisationsmode P_{S} bzw. P_{L} enthaltenen Intensität in den jeweils anderen Polarisationszustand eine Störung an das Kompensationselement appliziert, die die Doppelbrechung des Elements lokal zu ändern imstande ist.

Das Kompensationselement wird mit der Übertragungsstrecke derart gekoppelt, daß die Hauptpolarisationszustände P_{S} bzw. P_{L} des Kompensationselements durch die Übertragungsstrecke in die Polarisationen P_{Ü,L} bzw. P_{Ü,S} überführt werden, falls das Kompensationselement der Übertragungsstrecke vorgeschaltet ist, oder daß der Polarisationszustand P_{Ü,L} bzw. P_{Ü,S} der langsamen bzw. schnellen Komponente des Übertragungssignals am Eingang E des Kompensationselements auf den Hauptpolarisationszustand P_{S} bzw. P_{L} abgebildet wird, falls das Kompensationselement der Übertragungsstrecke nachgeschaltet ist.

Weiterhin wird die Aufgabe gelöst durch eine Vorrichtung zur Kompensation der Polarisationsmodendispersion in einer optischen Übertragungsstrecke mit polarisationsabhängigen Übertragungseigenschaften, die folgende Komponenten aufweist: Ein Kompensationselement, das vor oder nach der optischen Übertragungsstrecke angeordnet ist; eine Vorrichtung zur Applikation einer Störung, die die Doppelbrechung des Elements lokal zu ändern imstande ist, und die etwa im Abstand 1 vom Eingang E' des Kompensationselements angeordnet ist. Weiterhin weist die Vorrichtung eines oder mehrere Polarisationsstellelemente zur Anpassung der Polarisationen des Übertragungssignals an die Polarisationen P_{S} oder P_{L} des Kompensationselements und umgekehrt auf.

Vorzugsweise findet als polarisationserhaltendes doppelbrechendes Element eine polarisationserhaltende Faser (Kompensationsfaser) zur optischen Kompensation der Polarisationsmodendispersion Verwendung. Der Abgleich erfolgt jedoch nicht in erster Linie durch Abschneiden der Faser, sondern das zur Generierung einer Laufzeitdifferenz wirksame Stück der Kompensationsfaser wird durch Erzeugung einer lokal veränderten Doppelbrechung auf elasto-, magneto- und/oder elektro-optischem Weg oder durch einen anderen zerstörungsfreien Abgleich definiert. Nach dem Abgleich kann die Faser an der so zerstörungsfrei ermittelten Stelle abgeschnitten werden.

Wird das Übertragungssignal im definierten Polarisationszustand P_{S} oder P_{L} in die Kompensationsfaser eingekoppelt, wird durch die Störung im Abstand l vom Eingang E' der Faser ein Teil der Intensität in den anderen Zustand P_{L} bzw. P_{S} überführt; auf dem verbleibenden Faserstück der Länge L₀ - 1 wird nunmehr aufgrund der unterschiedlichen Ausbreitungsgeschwindigkeiten der Polarisationsmoden eine Phasen- bzw. Laufzeitdifferenz zwischen den Teilwellen mit den Polarisationen P_{L} bzw. P_{S} induziert. Diese Laufzeitdifferenz hängt u.a. ab von der Länge L₀ - 1 und dem Unterschied der Brechungsindizes nₒ, nₑ des ordentlichen bzw. außerordentlichen Strahls innerhalb des doppelbrechenden Materials. Durch Wahl des Ortes der Störung kann somit die Laufzeitdifferenz innerhalb des Kompensationselements an die Laufzeitdifferenz zwischen den Hauptpolarisationszuständen P_{Ü,L} und P_{Ü,S} der Übertragungsstrecke angepaßt werden.

Das polarisationserhaltende Element, insbesondere die Kompensationsfaser kann der Übertragungsstrecke vor- oder nachgeschaltet sein, wobei die Kompensation der Polarisationsmodendispersion in beiden Fällen möglich ist.

Ist das Kompensationselement der Übertragungsstrecke vorgeschaltet, wird die Polarisation des Übertragungssignals am Eingang des Kompensationselements auf einen der beiden Hauptpolarisationszustände P_{S} oder P_{L} abgebildet, wobei P_{S} und P_{L} in der Regel Linearpolarisationen sind. Die Polarisation der Signalquelle wird entsprechend P_{S} oder P_{L} gewählt, was auch durch entsprechende Orientierung des Kompensationselements relativ zur Signalquelle geschehen kann, oder mittels eines Polarisationsstellelements auf die Polarisation P_{S} oder P_{L} abgebildet. Am Eingang der Übertragungsstrecke erfolgt nach Durchlaufen des Kompensationselements wiederum eine Anpassung des schnellen Polarisationszustandes P_{S} der Kompensationsfaser auf den langsamen Polarisationszustand P_{Ü,L} der Übertragungsstrecke und umgekehrt, insbesondere mit Hilfe eines weiteren Polarisationsstellelementes. Eine Anpassung durch Anpassung der Orientierungen von Übertragungsstrecke und Faser ist in der Regel nicht ohne weiteres möglich, da P_{Ü,L} und P_{Ü,S} elliptische, nicht notwendig lineare Polarisationen sind. Es ist daher in der Regel eine Anpassung mit einem doppelbrechenden Verzögerungselement vorzunehmen, welches eine Überführung beliebiger Polarisationszustände ineinander ermöglicht, z.B. Kerr-Zelle, Pockelszelle oder eine Anordnung von λ/4 und λ/2-Plättchen, die vorzugsweise elektronisch ansteuer- und drehbar sind. Mit einer Anordnung der Folge λ/4 - λ/2- λ/4 -Plättchen lassen sich beliebige elliptische Polarisationen ineinander überführen und somit alle Punkte auf der Poincaré-Kugel erreichen.

Ist das Kompensationselement der Übertragungsstrecke nachgeschaltet, werden die Hauptpolarisationszustände P_{Ü,L} und P_{Ü,S} der Übertragungsstrecke am Eingang des Kompensationselements auf die Hauptpolarisationszustände P_{S} bzw. P_{L} abgebildet, wobei die schnelle Komponente P_{Ü,S} auf die langsame Komponente P_{L} abgebildet wird und umgekehrt. Die Anpassung erfolgt vorzugsweise mit Hilfe eines Polarisationsstellelementes. Durch die Störung wird eine Mischung der Polarisationskomponenten P_{S} und P_{L} derart eingestellt, daß die gesamte Intensität in einem der Zustande P_{S} bzw. P_{L} befindet und damit keine weitere Phasendifferenz bzw. Laufzeitunterschied zwischen den Teilwellen auf- bzw. abgebaut wird. Befindet sich die Störung im Abstand l vom Eingang E' des Kompensationselements, ist die wirksame Strecke des Kompensationselements gerade l, wobei l experimentell angepaßt werden kann, ohne das Kompensationselement zu zerstören. Nach Anpssung von 1 kann die Kompensationsfaser an dieser Stelle abgeschnitten werden und die Störung entfernt werden.

Kurzbeschreibung der Zeichnung, wobei zeigen:
- Figur 1: Ein Beispiel für ein aufgrund von Polarisationsmoden dispersion verzerrtes optisches Signal;
- Figur 2: Abgleich einer polarisationserhaltenden Faser durch mechanische Einwirkung (Preßmethode);
- Figuren 3 und 4: einen optischen Aufbau zur Kompensation der Polarisa tionsmodendispersion mit der Übertragungsstrecke vorbzw. nachgeschaltetem Kompensationselement.

### Wege zur Ausführung der Erfindung:

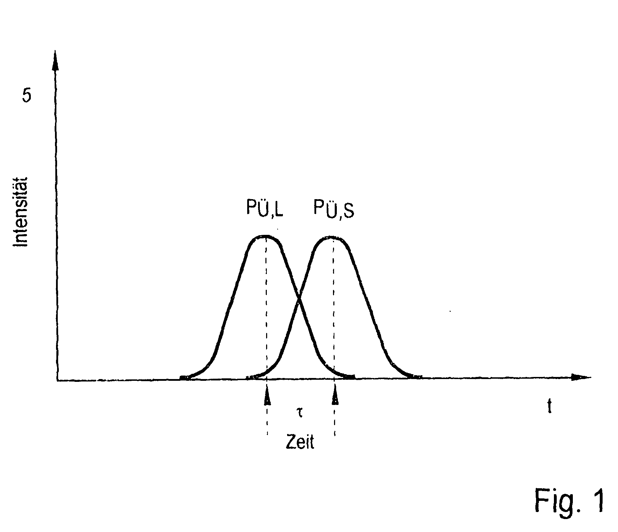

Figur 1 zeigt ein Beispiel für ein aufgrund von Polarisationsmodendispersion zeitlich verzerrtes optisches Signal, das entsteht, wenn beispielsweise ein kurzer Lichtpuls (Deltapuls) über eine Übertragungsstrecke mit wenigstens teilweise anisotroper Doppelbrechung übertragen wird. Der Lichtpuls mit der Polarisation P₀ wird aufgrund der doppelbrechenden Eigenschaften im Ergebnis in zwei Hauptpolarisationskomponenten P_{Ü,L} und P_{Ü,S} aufgespalten, die aufgrund der unterschiedlichen Gruppengeschwindigkeiten für die jeweilige Polarisation unterschiedlich schnell übertragen werden und daher zeitlich mit einer Zeitdifferenz τ versetzt am Ausgang der Übertragungsstrecke ankommen. Das aus der Überlagerung der Teilwellen resultierende Signal ist somit zeitlich gedehnt. Die Intensitäten der Teilwellen mit P_{Ü,L} und P_{Ü,S} sind nicht notwendig gleich, so daß beliebige Verzerrungen des Ausgangssignals durch die doppelbrechenden Eigenschaften der Übertragungsstrecke auftreten können. Die Verbreiterung der Teilpulse um jeweils den Schwerpunkt mit P_{Ü,L} und P_{Ü,S} entsteht durch teilweise statistische Orientierung der doppelbrechenden Faserstücke innerhalb der Übertragungsstrecke. Mit der Kompensationsmethode gelingt zumindest die Kompensation der Laufzeitdifferenz τ zwischen den Teilpulsen durch zeitliches Verzögern der schnelleren Komponente P_{Ü,S}.

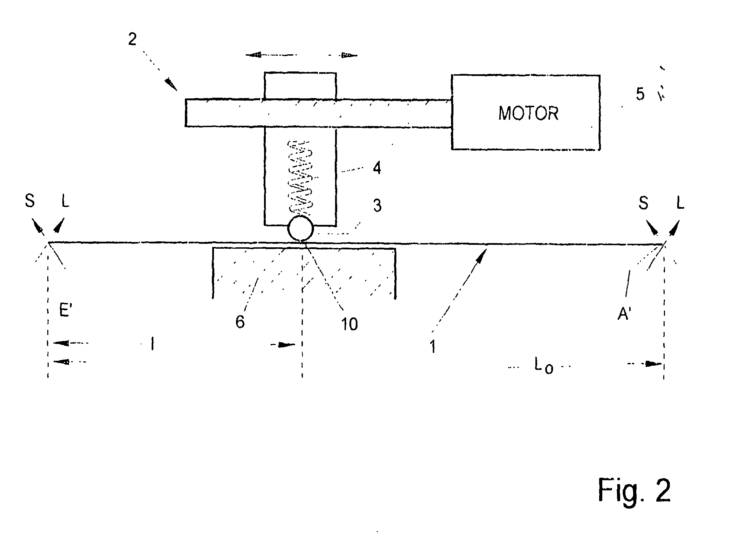

Figur 2 zeigt dazu einen Kompensator zur Kompensation der Laufzeitdifferenz τ unter Verwendung einer polarisationserhaltenden, stark doppelbrechenden Faser 1 als Kompensationselement. Dabei wird die polarisationserhaltende Faser 1 als optischer Kompensator, für Faserstrecken eingesetzt, ähnlich wie der Soleil-Babinet Kompensator in der Freistrahloptik. Der Längenabgleich der polarisationserhaltenden Faser 1 wird durch mechanische Einwirkung vorgenommen (Preßmethode).

Die Faser 1 der Länge L₀ wird am Anfang und am Ende auf einem Tisch in definierter Orientierung der schnellen bzw. langsamen Achse S bzw. L, in welcher jeweils der Polarisationszustand P_{S} bzw. P_{L} übertragen wird, aufgelegt. Oberhalb der Faser 1 ist eine Vorrichtung 2 zur Applikation einer Störung in Faserlängsrichtung verschiebbar angeordnet. Die Vorrichtung ist mittels eines Motors 5 in axialer Richtung verfahrbar.

Ein Druckrad 3, z.B. eine kleine Stahlrolle, drückt die Faser 1 mittels einer Feder 4 auf ein Gegenlager 6, z.B. den optischen Tisch, wodurch durch Zug bzw. Verspannungen innerhalb der Faser lokal deren Doppelbrechung verändert wird. Die Druckstelle 10 befindet sich im Abstand l vom Eingang E' der Faser. Die Kraftrichtung ist senkrecht zur Faserlängsrichtung und vorzugsweise um 45° gegenüber den Hauptpolarisationsrichtungen der Faser versetzt, um eine größtmögliche Empfindlichkeit der Kopplung der beiden Hauptpolarisationszustände auf die Krafteinwirkung zu realisieren.

Das Licht wird am Eingang E' der Faser 1 in eine der beiden Hauptpolarisationsrichtungen S oder L eingekoppelt. An der Druckstelle 10 koppelt dieses Licht infolge lokaler Verspannungen in der Faser teilweise in die andere Hauptpolarisationsrichtung über und läuft dann in beiden bis zum Ausgang A' der Faser. Auf dem Stück von der Druckstelle bis zum Ausgang A' mit der Länge L₀ - 1 baut sich der Laufzeitunterschied auf. Durch Abstimmen des Preßdruckes kann das Intensitätsverhältnis zwischen den beiden Hauptpolarisationsmoden im betreffenden Faserstück verändert werden. Die Intensitäten werden beispielsweise angepaßt, indem am Ausgang A' der Kompensationsfaser 1 ein polarisierender Strahlteiler eingefügt wird, der die beiden Hauptpolarisationsrichtungen P_{S} bzw. P_{L} trennt. Die entsprechenden Intensitäten werden mit je einem Detektor registriert und der Anpreßdruck variiert, bis das gewünschte Verhältnis erreicht ist, z. B. etwa 1:1.

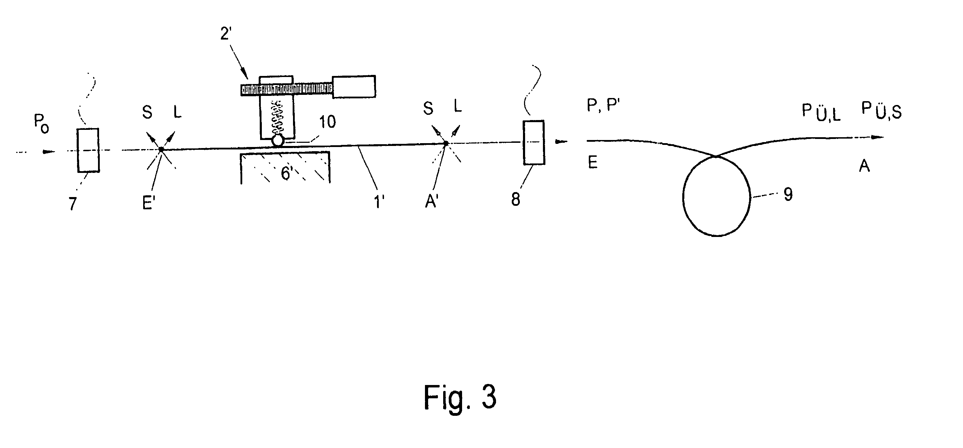

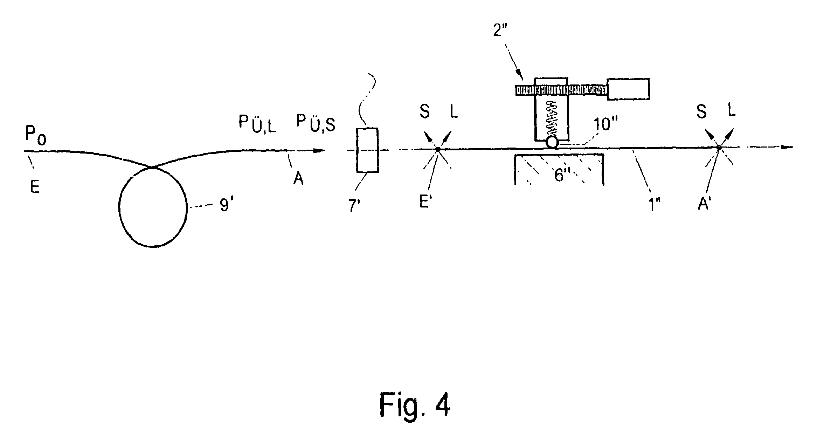

Der Faserkompensator gemäß Figur 2 wird zur Kompensation der Polarisationsmodendispersion der Übertragungsstrecke vor- bzw. nachgeschaltet, Figuren 3 bzw. 4.

Figur 3 zeigt eine polarisationserhaltende Faser 1' mit einer Störvorrichtung 2' gemäß Figur 2, die einer optischen Übertragungsstrecke 9, z.B. einer Glasfaserstrecke, vorgeschaltet ist. Die Übertragungsstrecke hat die Eigenschaft, ein Signal mit einer beliebigen Eingangspolarisation P oder P' auf die Ausgangspolarisationen P_{Ü,L} und P_{Ü,S} abzubilden, wobei zwischen den Komponenten mit P_{Ü,L} bzw. P_{Ü,S} eine Laufzeitdifferenz τ aufgebaut wird. Die Vorzugsorientierung der Polarisationsrichtungen P_{Ü,L} bzw. P_{Ü,S} der Übertragungsstrecke stimmen nicht notwendig mit den Hauptpolarisationsrichtungen P_{L} und P_{S} des Faserkompensators überein; erstere sind in der Regel beliebige elliptische Polarisationen, letztere in der Regel linear, wobei P_{Ü,L} und P_{Ü,S} bzw. P_{L} und P_{S} untereinander jeweils orthogonal sind.

P und P' sind die Polarisationszustände am Eingang E der Faserstrecke, für die eine Trennung der Polarisationsmodenlaufzeiten in der Faser mit Hilfe der Polarisation des übertragenden Lichtes am besten möglich ist. Am Ausgang A der Faserstrecke treten bei den hier behandelten Fasern mit Vorzugsorientierung zwei Impulse mit den orthogonalen Polarisationszuständen P_{Ü,L} und P_{Ü,S} auf, die getrennte Schwerpunkte besitzen. Dabei sind die Verhältnisse so, daß P am Eingang E der Faserstrecke in P_{Ü,S} am Ausgang A übergeht, dies entspricht der schnellen Polarisationsmode und P' am Eingang in P_{Ü,L} am Ausgang A, dies entspricht der langsamen Polarisationsmode.

Um eine Kompensation des Laufzeitunterschiedes τ zu erreichen, muß die der Übertragungsstrecke vorgeschaltete Kompensationsstrecke 1' sowohl bezüglich der Achsenorientierung als auch bezüglich der Polarisationszustände an die Faserstrecke angepaßt werden. Dies geschieht durch ein Polarisationsstellelement 8, das aus mechanisch manuell, bevorzugt aber elektronisch gesteuert verstellbaren Verzögerungsplatten besteht. Dieses Polarisationsstellelement 8 wandelt den linearen Polarisationszustand P_{S} der schnellen Polarisationsmode der Kompensationsfaser 1' verlustfrei in den im allgemeinen elliptischen Polarisationszustand P' der langsamen Polarisationsmode am Eingang der Faserstrecke um, die auf P_{Ü,L} abgebildet wird. Damit wird automatisch auch die langsame Mode P_{L} der Kompensationsstrecke auf die schnelle Polarisationsmode am Eingang der Übertragungsstrecke projiziert.

Anschließend erfolgt der Abgleich mit der Störvorrichtung 2'. Im allgemeinen bestimmt man den Abstand l bzw. die für den Aufbau des Zeitunterschieds relevante Länge L₀ - 1 durch Messung des Laufzeitunterschiedes τ an der Faserstrecke und Berechnung mit der bekannten Doppelbrechung der Kompensationsfaser 1'. Der Abstand l kann erfindungsgemäß jedoch auch rein experimentell bestimmen, indem man einen digitalen Übertragungsversuch vornimmt und z. B. mit Hilfe des Augendiagramms beim Abgleich feststellt, wann die Übertragung optimal ist. Auch durch die Messung der Polarisationsmodendispersion läßt sich der Abgleich durchführen.

Wichtig ist es, das von der Signalquelle oder von anderen Komponenten des optischen Netzes kommende Licht der Polarisation P₀ am Eingang E' der polarisationserhaltenden Kompensationsfaser 1' gezielt in den einen der beiden Hauptpolarisationszustände S, L einzukoppeln. Dieses wird mit Hilfe des Polarisationsstellelementes 7 erreicht, das beispielsweise wie das Element 8 aufgebaut ist. Es ist bekannt, auch eine zeitlich flukturierende Eingangspolarisation Pₒ auf diese Weise automatisch auf S oder L abzubilden.

Nach dem Abgleich kann die Kompensationsfaser an der Druckstelle 10' abgeschnitten und nur das Stück von der Druckstelle 10' bis zum Ausgang A' verwendet werden. Der Druckmechanismus 2' kann in diesem Fall entfernt werden. In diesem Fall muß die Polarisation P₀ des zu übertragenden Signals derart in die Rest-Kompensationsfaser eingekoppelt werden, daß die Komponenten S bzw. L im gewünschten, zuvor durch das Druckrad eingestellten Intensitätsverhältnis vorliegen. Ist dieses Intensitätsverhältnis 1:1, so wird das zu übertragende Signal z.B. unter 45° zu den Hauptpolarisationsrichtungen S bzw. L in die Rest-Kompensationsfaser eingekoppelt.

Figur 4 zeigt einen Faserkompensator gemäß Figur 2, bestehend aus einer polarisationserhaltenden Faser 1" mit einer Störvorrichtung 2", der einer optischen Übertragungsstrecke 9', z.B. einer Glasfaserstrecke, nachgeschaltet ist. Der Aufbau entspricht Figur 3, jedoch wird das Übertragungssignal mit der Polarisation Pₒ in diesem Fall zuerst in die Übertragungsstrecke 9' eingekoppelt, verläßt diese als ein Signal mit den Polarisationen P_{Ü,S} und P_{Ü,L}, wobei wiederum die schnelle Polarisationsmode P_{Ü,S} auf die langsame Mode P_{L} der Kompensationsfaser 1" abgebildet wird und umgekehrt.

Der Längenabgleich der Kompensationsfaser 1'' erfolgt durch Verschieben der Druckvorrichtung 2" in axialer Richtung, wobei hier das Faserstück vom Eingang E' der Faser bis zur Druckstelle 10" für die Kompensation des in der Übertragungsstrecke 9" angefallenen Laufzeitunterschieds wirksam ist. Nach erfolgtem Abgleich kann die Kompensationsfaser 1'' daher wieder an der Druckstelle abgeschnitten werden.

An Stelle der Druckvorrichtung 2", das die Überkopplung einer Polarisationsmode in den jeweils anderen Kanal ermöglicht, können auch andere Störungen wie z. B. lokale elektrische oder magnetische Felder, Wärmegradienten, lokale Verwindungen oder Biegungen der Faser o. a. herangezogen werden.

Das erfindungsgemäße Verfahren sowie die entsprechende Vorrichtung haben den Vorteil, daß Länge des Faserstücks, das zum Ausgleich der Laufzeitdifferenz erforderlich ist, nicht vor der Implementierung in den optischen Aufbau berechnet werden muß, sondern ohne Zerstörung der Kompensationsfaser direkt im Aufbau bestimmt werden kann. Der dazu verwendete Störmechanismus, vorzugsweise ein Druckmechanismus, kann nach Feststellung der für das jeweilige System optimalen Einstellungen entfernt und zum Abgleich weiterer Übertragungsstrecken wiederverwertet werden.

### Gewerbliche Anwendbarkeit:

Das erfindungsgemäße Verfahren und die entsprechende Vorrichtung sind beim Aufbau und bei der Optimierung von optischen Übertragungssystemen vorteilhaft einsetzbar, um die Polarisationsmodendispersion in situ zunächst zerstörungsfrei auch ohne vorherige Berechnungen der Faserlänge und -orientierung zu kompensieren. Durch Kompensation der Polarisationsmodendispersion kann die Leistungsfähigkeit derartiger Übertragungssysteme insbesondere für die digitale Datenübertragung hinsichtlich Signalqualität und Übertragungsraten gesteigert werden.

## Patentansprüche

1. Verfahren zur Kompensation der Polarisationsmodendispersion in einer optischen Übertragungsstrecke (9, 9') mit einem Eingang E und einem Ausgang A und mit polarisationsabhängigen Übertragungseigenschaften, mit folgenden Schritten:
1.1.1. Anordnen eines doppelbrechenden Kompensationselements (1, 1', 1") vor oder nach der optischen Übertragungsstrecke (9, 9'), wobei das Kompensationselements (1, 1', 1") einen Eingang E', einen Ausgang A', einen schnell und einen langsam übertragenden Hauptpolarisationszustand P_{S} bzw. P_{L} und die Länge L₀ hat;
1.2.1. Einkoppeln des optischen Übertragungssignals in das Kompensationselement (1, 1', 1") vor dem Einkoppeln in die Übertragungsstrecke (9, 9') derart, daß die Polarisation P₀ des Übertragungssignals mit einem der Polarisationszustände P_{S} bzw. P_{L} des Kompensationselements (1, 1', 1'') übereinstimmt;
oder
1.2.2. Einkoppeln des optischen Übertragungssignals in das Kompensationselement (1, 1', 1") nach Durchlaufen der Übertragungsstrecke (9, 9') derart, daß die Polarisationen P_{Ü,L} und P_{Ü,S} der langsamen bzw. schnellen Komponente des Übertragungssignals mit jeweils einem der Polariationszustände P_{S} bzw. P_{L} des Kompensationselements (1, 1', 1'') übereinstimmen;
1.3. Applizieren einer Störung, die die Doppelbrechung des Elements lokal zu ändern imstande ist, an das Element etwa im Abstand l vom Eingang E' des Kompensationselements (1, 1', 1'');
1.4. Koppeln des Kompensationselements (1, 1', 1'') mit der Übertragungsstrecke (9, 9') derart, daß
1.4.1. die Hauptpolarisationszustände P_{S} bzw. P_{L} des Kompensationselements (1, 1', 1'') durch die Übertragungsstrecke (9, 9') in die Polarisationen P_{Ü,L} bzw. P_{Ü,S} überführt werden, falls das Kompensationselement (1, 1', 1'') der Übertragungsstrecke (9, 9') vorgeschaltet ist,
oder daß
1.4.2. der Polarisationszustand P_{Ü,L} bzw. P_{Ü,S} der langsamen bzw. schnellen Komponente des Übertragungssignals am Eingang E des Kompensationselements (1, 1', 1'') auf den Hauptpolarisationszustand P_{S} bzw. P_{L} abgebildet wird, falls das Kompensationselement (1, 1', 1'') der Übertragungsstrecke (9, 9') nachgeschaltet ist.

2. Verfahren nach Anspruch 1, **dadurch gekennzeichnet,**
**daß** die Störung ein Ausüben von mechanischem Druck, Zug und/oder Anbringen lokaler elektrischer und/oder magnetischer Felder und/oder Wärmegradienten ist.

3. Verfahren nach Anspruch 1 oder 2, **dadurch gekennzeichnet,**
**daß** das Kompensationselement (1, 1', 1") eine polarisationserhaltende stark doppelbrechende Faser ist.

4. Verfahren nach einem der vorangegangenen Ansprüche, **dadurch gekennzeichnet,**
**daß** die Polarisation P₀ des Übertragungssignals bei der Übertragungsstrecke vorgeschaltetem Kompensationselement mittels eines Polarisationsstellelements an einen der Hauptpolarisationszustände P_{S} bzw. P_{L} des Elements angepaßt wird.

5. Verfahren nach einem der Ansprüche 1 bis 4, **dadurch gekennzeichnet,**
**daß** die Anpassung des schnellen bzw. langsamen Polarisationszustandes des Kompensationselements (1, 1', 1") P_{S} bzw. P_{L} auf den langsamen bzw. schnellen Polarisationszustand der Übertragungsstrecke (9, 9') P_{Ü,L} bzw. P_{Ü,S} mit Hilfe eines Polarisationsstellelementes vorgenommen wird.

6. Verfahren nach einem der Ansprüche 1 bis 5, **dadurch gekennzeichnet,**
**daß** das Intensitätsverhältnis zwischen den Polarisationsmoden P_{S} und P_{L} durch Variation der Stärke der Störung, insbesondere der auf das Kompensationselement wirkenden mechanischen Kraft, der magnetischen und/oder elektrischen Feldstärke und/oder Wärmeeinwirkung, angepaßt wird.

7. Verfahren nach einem der vorangegangenen Ansprüche, **dadurch gekennzeichnet,**
**daß** die Zeitverzögerung der Teilwellen mit den Polarisationen P_{S} und P_{L} innerhalb des Kompensationselements durch geeignete Wahl des Abstands l der Störung vom Eingang E' des Elements an die Zeitverzögerung der Teilwellen mit den Polarisationen P_{Ü,L} bzw. P_{Ü,S} innerhalb der Übertragungsstrecke angepaßt wird.

8. Verfahren nach Anspruch 7, **dadurch gekennzeichnet,**
**daß** die Störvorrichtung nach Anpassung des Abstands l entfernt, das Kompensationselement im Abstand l vom Eingang E' des Elements durchtrennt und derjenige Teil des Kompensationselements entfernt wird, der der Übertragungsstrecke abgewandt ist, wobei im Falle eines der Übertragungsstrecke vorgeschalteten Kompensationselements das Übertragungssignal derart in das Kompensationselement eingekoppelt wird, daß Intensitätsverhältnis zwischen den Polarisationsmoden P_{S} und P_{L} dem zuvor mittels der Störvorrichtung eingestellten Intensitätsverhältnis entspricht.

9. Verfahren nach einem der vorangegangenen Ansprüche, **dadurch gekennzeichnet,**
**daß** im Falle eines der Übertragungsstrecke vorgeschalteten Kompensationselements das Intensitätsverhältnis zwischen den Polarisationsmoden P_{S} und P_{L} nach Durchlaufen der Störstelle bzw. des Kompensationselements etwa 1:1 beträgt.

10. Verfahren nach Anspruch 8 oder 9, **dadurch gekennzeichnet,**
**daß** im Falle eines der Übertragungsstrecke vorgeschalteten Kompensationselements nach Entfernen des der Übertragungsstrecke abgewandten Teils des Kompensationselements das Übertragungssignal mit einer Polarisation in das Kompensationselement eingekoppelt wird, die um etwa 45° relativ zu P_{S} und P_{L} gedreht ist.

11. Vorrichtung zur Kompensation der Polarisationsmodendispersion in einer optischen Übertragungsstrecke (9,9') mit einem Eingang E und einem Ausgang A und mit polarisationsabhängigen Übertragungseigenschaften, die folgende Komponenten aufweist:
11.1. Ein doppelbrechendes Kompensationselement (1, 1', 1'') mit einem Eingang E', einem Ausgang A', einem schnell und einem langsam übertragenden Hauptpolariationszustand P_{S} bzw. P_{L} und der Länge L₀, das vor oder nach der optischen Übertragungsstrecke (9,9') angeordnet ist;
11.2. eine Vorrichtung (2, 2', 2") zur Applikation einer Störung, genannt Störvorrichtung, die die Doppelbrechung des Kompensationselements (1, 1', 1'') lokal zu ändern imstande ist, und auf das Element etwa im Abstand l vom Eingang E' wirkt;
11.3. ein Polarisationsstellelement (7) zur Anpassung der Polarisation P₀ des Übertragungssignals an eine der Polarisationen P_{S} oder P_{L}, welches am Eingang E' des Kompensationselements (1, 1', 1") angeordnet ist;
und/oder
11.4. ein Polarisationsstellelement (7'), welches zwischen Ausgang A der Übertragungsstrecke und Eingang E' des Kompensationselements (1, 1', 1") angeordnet ist, zur Anpassung der Polarisation P_{Ü,L} bzw. P_{Ü,S} des Übertragungssignals nach Durchlaufen der Übertragungsstrecke (9, 9') an die Polarisationen P_{S} bzw. P_{L};
und/oder
11.5. ein Polarisationsstellelement (8), welches zwischen Ausgang A' des Kompensationselements (1, 1', 1'') und Eingang E der Übertragungsstrecke angeordnet ist, zur Anpassung der Polarisation P_{S} bzw. P_{L} des Übertragungssignals nach Durchlaufen des Kompensationselements (1, 1', 1'') an die Polarisationen, die durch die Übetragungsstrecke (9, 9') auf die Polarisationen P_{Ü,L} bzw. P_{Ü,S} abgebildet werden.

12. Vorrichtung nach Anspruch 11, **dadurch gekennzeichnet,**
**daß** das Kompensationselement (1, 1', 1") eine polarisationserhaltende Faser ist.

13. Vorrichtung nach Anspruch 11, **dadurch gekennzeichnet,**
**daß** das Kompensationselement (1, 1', 1'') ein doppelbrechender Kristall, z.B. Lithium Niobat (LiNbO₃), ist.

14. Vorrichtung nach einem der Ansprüche 11 bis 13, **dadurch gekennzeichnet,**
**daß** die Störvorrichtung (2, 2', 2") parallel zur optischen Achse des Kompensationselements (1, 1', 1'') verschiebbar ist, vorzugsweise mittels eines Motors (5).

15. Vorrichtung nach einem der Ansprüche 11 bis 14, **dadurch gekennzeichnet,**
**daß** die Störvorrichtung (2, 2', 2") ein mechanisches Element ist, vorzugsweise ein Druckrad (3) mit entsprechendem Gegenlager (6, 6', 6"), welches eine Kraft auf das Kompensationselement (1, 1', 1") auszuüben imstande ist, wobei die Kraft vorzugsweise senkrecht zur optischen Achse des Kompensationselements (1, 1', 1'') wirkt.

16. Vorrichtung nach Anspruch 15, **dadurch gekennzeichnet,**
**daß** die Kraft parallel zur durch die Polarisationrichtungen P_{S} bzw. P_{L} des Kompensationselements definierten Ebene wirkt, wobei die Kraftrichtung um etwa 45 ° gegenüber P_{S} und P_{L} gedreht ist.

17. Vorrichtung nach Anspruch 15, **dadurch gekennzeichnet,**
**daß** die Stärke der Kraft variabel ist.

18. Vorrichtung nach einem der Ansprüche 11 bis 14, **dadurch gekennzeichnet,**
**daß** die Störvorrichtung (2, 2', 2") ein Kondensator und/oder eine Spule ist, mit welcher ein elektrisches und/oder magnetisches Feld, ggf. auch Gradientenfeld, erzeugt wird, welches lokal auf das Kompensationselement (1, 1', 1'') wirkt.

19. Vorrichtung nach einem der Ansprüche 11 bis 18, **dadurch gekennzeichnet,**
**daß** die Polarisationsstellelemente (7, 7', 8) aus mechanisch verstellbaren Verzögerungsplatten bestehen, die vorzugsweise elektronisch steuerbar sind.

20. Vorrichtung nach einem der Ansprüche 11 bis 18, **dadurch gekennzeichnet,**
**daß** die Polarisationsstellelemente (7, 7', 8) elektrooptische Kerr- oder Pockelszellen sind.

21. Vorrichtung nach einem der Ansprüche 11 bis 18, **dadurch gekennzeichnet,**
**daß** die Polarisationsstellelemente (7, 7', 8) elektrooptische Flüssigkristallzellen sind.

## Claims

1. Method for compensating polarization mode dispersion in an optical transmission link (9, 9') with an input E and an output A and with polarization-dependent transmission characteristics, having the following steps:
1.1.1 arranging a birefringent compensating element (1, 1', 1") before or after the optical transmission link (9, 9'), the compensating element (1, 1', 1") having an input E', an output A', a fast and a slow transmitting main polarization state P_{S} and P_{L}, and the length L₀;
1.2.1 coupling the optical transmission signal into the compensating element (1, 1', 1") prior to coupling into the transmission link (9, 9') such that the polarization P₀ of the transmission signal agrees with one of the polarization states P_{S} or P_{L} of the compensating element (1, 1', 1");
or
1.2.2 coupling the optical transmission signal into the compensating element (1, 1', 1") after traversing the transmission link (9, 9') such that the polarizations P_{Ü,L} and P_{Ü,S} of the slow and fast components of the transmission signal each agree with one of the polarization states P_{S} or P_{L} of the compensating element (1, 1', 1 ");
1.3. application to the element, approximately at a distance 1 from the input E' of the compensating element (1, 1', 1"), of a disturbance capable of locally changing the birefringence of the element;
1.4 coupling the compensating element (1, 1', 1") with the transmission link (9, 9') such that
1.4.1 the main polarization states P_{S} and P_{L} of the compensating element (1, 1', 1") are converted by the transmission link (9, 9') to the polarizations P_{Ü,L} and P_{Ü,S} in the event that the compensating element (1, 1', 1") is connected before the transmission link (9, 9');
or such that
1.4.2. the polarization state P_{Ü,L} or P_{Ü,S} of the slow or fast component of the transmission signal at the input E of the compensating element (1, 1', 1") is mapped onto the main polarization state P_{S} or P_{L} in the event that the compensating element (1, 1', 1") is connected after the transmission link (9, 9').

2. Method according to claim 1, **characterized in that**
the disturbance is an exertion of mechanical pressure, tension, and/or the application of local electric and/or magnetic fields and/or temperature gradients.

3. Method according to claim 1 or 2, **characterized in that**
the compensating element (1, 1', 1") is a polarization-maintaining strongly birefringent fiber.

4. Method according to any one of the preceding claims, **characterized in that**
the polarization P₀ of the transmission signal is matched by means of a polarization setting element to one of the main polarization states P_{S} or P_{L} of the compensating element when the compensating element is connected before the transmission link.

5. Method according to any one of claims 1 through 4, **characterized in that**
the matching of the fast or slow polarization state P_{S} or P_{L} of the compensating element (1,1', 1") to the slow or fast polarization state P_{Ü,L} or P_{Ü,S} of the transmission link (9, 9') is accomplished with the aid of a polarization setting element.

6. Method according to any one of claims 1 through 5, **characterized in that**
the intensity ratio between polarization modes P_{S} and P_{L} is matched by varying the strength of the disturbance, in particular the mechanical force, magnetic and/or electric field strength and/or temperature effect acting on the compensating element.

7. Method according to any one of the preceding claims, **characterized in that**
the time delay of the component waves with polarizations P_{S} and P_{L} within the compensating element is matched to the time delay of the component waves with polarizations P_{Ü,L} and P_{Ü,S} within the transmission link through appropriate choice of the distance 1 of the disturbance from the input E' of the element.

8. Method according to claim 7, **characterized in that**
the disturbance device is removed after matching of the distance 1, the compensating element is divided at a distance l from the input E' of the element, and that part of the compensating element facing away from the transmission link is removed, wherein, in the case of a compensating element connected before the transmission link, the transmission signal is coupled into the compensating element in such a manner that the intensity ratio between the polarization modes P_{S} and P_{L} corresponds to the intensity ratio previously set by means of the disturbance device.

9. Method according to any one of the preceding claims, **characterized in that**
in the case of a compensating element connected before the transmission link, the intensity ratio between the polarization modes P_{S} and P_{L} is approximately 1:1 after passing through the disturbance point or the compensating element.

10. Method according to claim 8 or 9, **characterized in that**
in the case of a compensating element connected before the transmission link, after removal of the part of the compensating element facing away from the transmission link, the transmission signal is coupled into the compensating element with a polarization rotated by approximately 45° relative to P_{S} and P_{L}.

11. Device for compensating polarization mode dispersion in an optical transmission link (9, 9') with an input E and an output A and with polarization-dependent transmission characteristics, having the following components:
11.1. a birefringent compensating element (1, 1', 1") having an input E', an output A', a fast and a slow transmitting main polarization state P_{S} and P_{L}, and the length L₀, said compensating element (1, 1', 1") being arranged before or after the optical transmission link (9, 9');
11.2. a device (2, 2', 2") for applying a disturbance, referred to as a disturbance device, capable of locally changing the birefringence of the compensating element (1, 1', 1") and acting on the element at approximately a distance 1 from the input E';
11.3. a polarization setting element (7), disposed at the input E' of the compensating element (1, 1', 1"), for matching the polarization P₀ of the transmission signal to one of the polarizations P_{S} or P_{L};
and/or
11.4. a polarization setting element (7'), disposed between output A of the transmission link and input E' of the compensating element (1, 1', 1"), for matching the polarization P_{Ü,L} or P_{Ü,S} of the transmission signal to the polarizations P_{S} or P_{L} after traversal of the transmission link (9, 9');
and/or
11.5. a polarization setting element (8), disposed between output A' of the compensating element (1, 1', 1") and input E of the transmission link, for matching the polarization P_{S} or P_{L} of the transmission signal, after traversal of the compensating element (1, 1', 1 "), to the polarizations mapped by the transmission link (9, 9') to the polarizations P_{Ü,L} and P_{Ü,S}.

12. Device according to claim 11, **characterized in that**
the compensating element (1, 1', 1") is a polarization-maintaining fiber.

13. Device according to claim 11, **characterized in that**
the compensating element (1, 1', 1") is a birefringent crystal, e.g. lithium niobate (LiNbO₃).

14. Device according to any one of claims 11 through 13, **characterized in that**
the disturbance device (2, 2', 2") is displaceable parallel to the optical axis of the compensating element (1, 1', 1"), preferably by means of a motor (5).

15. Device according to any one of claims 11 through 14, **characterized in that**
the disturbance device (2, 2', 2") is a mechanical element, preferably a pressure wheel (3) with corresponding counter-bearing (6, 6', 6"), capable of exerting a force on the compensating element (1, 1', 1"), said force preferably acting perpendicularly to the optical axis of the compensating element (1, 1', 1").

16. Device according to claim 15, **characterized in that**
the force acts parallel to the plane defined by the polarization directions P_{S} and P_{L} of the compensating element, the direction of force being rotated by approximately 45° relative to P_{S} and P_{L}.

17. Device according to claim 15, **characterized in that**
the magnitude of the force is variable.

18. Device according to any one of claims 11 through 14, **characterized in that**
the disturbance device (2, 2', 2") is a capacitor and/or a coil with which an electric and/or magnetic field or, where appropriate, also a gradient field, is produced, said field acting locally on the compensating element (1, 1', 1").

19. Device according to any one of claims 11 through 18, **characterized in that**
the polarization setting elements (7, 7', 8) consist of mechanically adjustable retardation plates, said retardation plates being preferably electronically controllable.

20. Device according to any one of claims 11 through 18, **characterized in that**
the polarization setting elements (7, 7', 8) are electro-optical Kerr or Pockels cells.

21. Device according to any one of claims 11 through 18, **characterized in that**
the polarization setting elements (7, 7', 8) are electro-optical liquid crystal cells.

## Revendications

1. Procédé de compensation de la dispersion des modes de polarisation sur une liaison optique (9, 9') avec une entrée E et une sortie A et des propriétés de transmission dépendant de la polarisation, comprenant les étapes suivantes :
1.1.1. Mise en place d'un élément de compensation biréfringent (1, 1', 1") devant ou derrière la liaison optique (9, 9'), l'élément de compensation (1, 1', 1") ayant une entrée E', une sortie A', un état principal de polarisation à transmission rapide P_{S}, un état principal de polarisation à transmission lente P_{L} et une longueur L₀ ;
1.2.1. Injection du signal optique de transmission dans l'élément de compensation (1, 1', 1") avant l'injection dans la liaison de transmission (9, 9'), de telle sorte que la polarisation P₀ du signal de transmission correspond à l'un des états de polarisation P_{S} et P_{L} de l'élément de compensation (1, 1', 1") ;
ou
1.2.2. Injection du signal optique de transmission dans l'élément de compensation (1, 1', 1") après traversée de la liaison optique (9, 9'), de telle sorte que les polarisations P_{Ü,L} et P_{Ü,S} de la composante lente ou, respectivement, rapide du signal de transmission correspondent chacune à l'un des états de polarisation P_{S} et P_{L} de l'élément de compensation (1, 1', 1") ;
1.3. Génération sur l'élément, à un intervalle 1 de l'entrée E' de l'élément de compensation (1, 1', 1"), d'un dérangement susceptible de modifier localement la biréfringence de l'élément ;
1.4. Couplage de l'élément de compensation (1, 1', 1") avec la liaison de transmission (9, 9'), de telle sorte que
1.4.1. les états de polarisation P_{S} et P_{L} de l'élément de compensation (1, 1', 1") sont transférés par la liaison de transmission (9, 9') dans les polarisations P_{Ü,L} et P_{Ü,S}, au cas où l'élément de compensation (1, 1', 1") précède la liaison de transmission (9, 9')
ou
1.4.2. l'état de polarisation P_{Ü,L} ou P_{Ü,S} de la composante lente ou, respectivement, rapide du signal de transmission est reproduit à l'entrée E de l'élément de compensation (1, 1', 1"), au cas où l'élément de compensation (1, 1', 1") se trouve derrière la liaison de transmission (9, 9').

2. Procédé selon la revendication 1, **caractérisé en ce que** le dérangement consiste en l'exercice d'une pression ou traction mécanique et/ou en l'application de champs électriques et/ou magnétiques locaux et/ou de gradients de température.

3. Procédé selon l'une des revendications 1 ou 2,
**caractérisé en ce que**
l'élément de compensation (1, 1', 1") est une fibre fortement biréfringente maintenant la polarisation.

4. Procédé selon l'une des revendications précédentes,
**caractérisé en ce que**
la polarisation P₀ du signal de transmission, dans le cas d'un élément de compensation précédant la liaison de transmission, est adaptée à l'aide d'un élément stabilisateur de polarisation à l'un des principaux états de polarisation P_{S} et P_{L} de l'élément.

5. Procédé selon l'une des revendications 1 à 4, **caractérisé**
**en ce que**
l'adaptation de l'état de polarisation rapide ou lent P_{S} ou P_{L} de l'élément de compensation (1, 1', 1") à l'état de polarisation lent ou rapide P_{Ü,L} ou P_{Ü,S} de la liaison de transmission (9, 9') est effectuée à l'aide d'un élément stabilisateur de polarisation

6. Procédé selon l'une des revendications 1 à 5, **caractérisé**
**en ce que**
le rapport d'intensité entre les modes de polarisation P_{S} et P_{L} est adapté en faisant varier l'intensité du dérangement, notamment la force mécanique, l'intensité du champ magnétique et/ou électrique et/ou l'effet thermique exercés sur l'élément de compensation.

7. Procédé selon l'une des revendications précédentes,
**caractérisé en ce que**
le décalage dans le temps des ondes partielles de polarisation P_{S} et P_{L} à l'intérieur de l'élément de compensation est adapté au décalage dans le temps des ondes partielles de polarisation P_{Ü,L} et P_{Ü,S} à l'intérieur de la liaison de transmission par le choix approprié de l'intervalle 1 entre le dérangement et l'entrée E' de l'élément.

8. Procédé selon la revendication 7, **caractérisé en ce que** le dispositif générant le dérangement est enlevé après l'adaptation de l'intervalle 1, l'élément de compensation est coupé à l'intervalle 1 de l'entrée E' de l'élément et la partie de l'élément de compensation opposée à la liaison de transmission est enlevée, le signal de transmission étant, dans le cas d'un élément de compensation précédant la liaison de transmission, injecté dans l'élément de compensation de telle sorte que le rapport d'intensité entre les modes de polarisation P_{S} et P_{L} correspond au rapport d'intensité ajusté préalablement à l'aide du dispositif générant le dérangement.

9. Procédé selon l'une des revendications précédentes,
**caractérisé en ce que**
dans le cas d'un élément de compensation précédant la liaison de transmission, le rapport d'intensité entre les modes de polarisation P_{S} et P_{L} est de 1:1 après passage du point de dérangement ou de l'élément de compensation.

10. Procédé selon l'une des revendications 8 ou 9,
**caractérisé en ce que**
dans le cas d'un élément de compensation précédant la liaison de transmission, après enlèvement de la partie de l'élément de compensation opposée à la liaison de transmission, le signal de transmission est injecté dans l'élément de compensation avec une polarisation accusant un angle d'environ 45° par rapport à P_{S} et P_{L}.

11. Dispositif servant à la compensation de la dispersion des modes de polarisation d'une liaison optique (9, 9') avec une entrée E et une sortie A et des propriétés de transmission dépendant de la polarisation, présentant les composantes suivantes :
11.1. un élément de compensation biréfringent (1, 1', 1") avec une entrée E', une sortie A', un état principal de polarisation à transmission rapide P_{S}, un état principal de polarisation à transmission lente P_{L} et une longueur L₀, placé devant ou derrière la liaison optique (9, 9') ;
11.2. un dispositif (2, 2', 2") servant à générer un dérangement, appelé générateur de dérangement, pouvant modifier localement la biréfringence de l'élément de compensation (1, 1', 1") et agissant sur l'élément à un intervalle 1 de l'entrée E' ;
11.3. un élément stabilisateur de polarisation (7) pour l'adaptation de la polarisation P₀ du signal de transmission à l'une des polarisations P_{S} ou P_{L} , lequel est placé à l'entrée E' de l'élément de compensation (1, 1', 1") ;
et/ou
11.4. un élément stabilisateur de polarisation (7') placé entre la sortie A de la liaison de transmission et l'entrée E' de l'élément de compensation (1, 1', 1") pour l'adaptation de la polarisation P_{Ü,L} ou P_{Ü,S} du signal de transmission, après passage de la liaison de transmission (9, 9'), aux polarisations P_{S} ou P_{L} ;
et/ou
11.5. un élément stabilisateur de polarisation (8) placé entre la sortie A' de l'élément de compensation (1, 1', 1") et l'entrée E de la liaison de transmission pour l'adaptation de la polarisation P_{S} ou P_{L} du signal de transmission, après passage de la liaison de transmission (9, 9'), aux polarisations reproduites par la liaison de transmission (9, 9') sur les polarisations P_{Ü,L} ou P_{Ü,S}.

12. Dispositif selon la revendication 11, **caractérisé en ce que**
l'élément de compensation (1, 1', 1") est une fibre maintenant la polarisation.

13. Dispositif selon la revendication 11, **caractérisé en ce que**
l'élément de compensation (1, 1', 1") est un cristal biréfringent, par exemple de niobate de lithium (LiNbO₃).

14. Dispositif selon l'une des revendications 11 à 13,
**caractérisé en ce que**
le générateur de dérangement (2, 2', 2") peut être déplacé parallèlement à l'axe optique de l'élément de compensation (1, 1', 1"), de préférence à l'aide d'un moteur (5).

15. Dispositif selon l'une des revendications 11 à 14,
**caractérisé en ce que**
le générateur de dérangement (2, 2', 2") est un élément mécanique, de préférence une roue de pression (3) avec butée (6, 6', 6") pouvant exercer une force sur l'élément de compensation (1, 1', 1"), cette force agissant de préférence perpendiculairement à l'axe optique de l'élément de compensation (1, 1', 1").

16. Dispositif selon la revendication 15, **caractérisé en ce que**
la force agit parallèlement au plan défini par les directions de polarisation P_{S} ou P_{L} de l'élément de compensation, la direction de la force accusant un angle d'environ 45° par rapport à P_{S} et P_{L}.

17. Dispositif selon la revendication 15, **caractérisé en ce que**
la force a une intensité variable.

18. Dispositif selon l'une des revendications 11 à 14,
**caractérisé en ce que**
le générateur de dérangement (2, 2', 2") est un condensateur et/ou une bobine générant un champ électrique et/ou magnétique et éventuellement aussi un champ irrotationnel agissant localement sur l'élément de compensation (1, 1', 1").

19. Dispositif selon l'une des revendications 11 à 18,
**caractérisé en ce que**
les éléments stabilisateurs de polarisation (7, 7', 8) sont constitués de plaques décélératrices mécaniquement ajustables, de préférence à commande électronique.

20. Dispositif selon l'une des revendications 11 à 18,
**caractérisé en ce que**
les éléments stabilisateurs de polarisation (7, 7', 8) sont des cellules de Kerr ou Pockels.

21. Dispositif selon l'une des revendications 11 à 18,
**caractérisé en ce que**
les éléments stabilisateurs de polarisation (7, 7', 8) sont des cellules électrooptiques à cristaux liquides
